# EUROPEAN PATENT APPLICATION

(11) **EP 1 986 419 A1**
(43) Date of publication of application: **29.10.2008**
(21) Application number: 08007854.6
(22) Date of filing: 23.04.2008
(51) Int. Cl.: H04N 5/14, H04N 7/26

(54) **Scene change detection device, coding device, and scene change detection method**

(30) Priority: 24.04.2007 JP 2007114273
(71) Applicant: NEC Electronics Corporation, Kawasaki, Kanagawa 211-8668 (JP)
(72) Inventor: Sasakura, Yasuaki, Kanagawa 211-8668 (JP)
(74) Representative: Glawe, Delfs, Moll

(57) **Abstract**

A scene change detection device according to the present invention includes an audio information determination part detecting silent state of audio signal to output silence detection time information, an image information determination part detecting brightness change or decreased level of brightness of an image in image signal to store scene change time information indicating time detecting the brightness change or decreased level of brightness, a scene change candidate point detector outputting scene change candidate time based on the silence detection time information and the scene change time information, and an output determination part outputting scene change detection information based on time difference between successive first scene change candidate time and second scene change candidate time and a detection maximum value.

## Description

### BACKGROUND OF THE INVENTION

### 1. Field of the Invention

The present invention relates to a scene change detection device, a coding device, and a scene change detection method. More particularly, the present invention relates to a scene change detection device, a coding device, and a scene change detection method detecting scene change based on change point of input audio and input image.

### 2. Description of Related Art

In many video recorders recording TV programs, commercial message (CM) part can be detected from recorded information to skip or delete commercial part. There are many proposals of detection device and detection method of the commercial part in such a device. A few examples of such devices are disclosed in Japanese Unexamined Patent Application Publication No. 2004-147204 (hereinafter referred to as related example 1) and Japanese Patent Translation Publication No. 2003-534757 (hereinafter referred to as related example 2).

In the related example 1, scene change point is detected from input image and input audio to calculate signal section from the detected scene change point. The CM detection device includes specific section determination means determining whether the signal section matches specific characteristic of the CM. The specific characteristic of the CM is information indicating switching of audio from stereo to monaural or predetermined condition whether the signal section is integral multiple of 15 seconds, which is a unit time of CM section.

On the other hand, in the related example 2, the CM detection device includes detection means detecting edge black-frame information and fade black-frame information based on image information, time difference means determining first time difference information based on two adjacent information of the edge black-frame information or the fade black-frame information, and test means determining whether the first time difference information is in first preset time difference information. In other words, in the related example 2, when the first time difference information is in the first preset time difference information, the section is detected as commercial section. Note that the first preset time difference information is assembled information having range of 0.5 seconds before and after each of a plurality of set values such as 10 seconds, 20 seconds, and 30 seconds, for example.

In the related examples 1 and 2, the CM part is detected based on the predetermined set values. Therefore, when the TV program having indefinite CM period is recorded (when each CM time is provided in a random manner, for example), the CM part of such TV programs may not be detected.

### SUMMARY

According to one aspect of the present invention, there is provided a scene change detection device including an audio information determination part detecting silent state of audio signal to output silence detection time information, an image information determination part detecting brightness change or decreased level of brightness of an image in image signal to store scene change time information indicating time detecting the brightness change or decreased level of brightness, a scene change candidate point detector outputting scene change candidate time based on the silence detection time information and the scene change time information, and an output determination part outputting scene change detection information based on time difference between successive first scene change candidate time and second scene change candidate time and a detection maximum value.

According to another aspect of the present invention, there is provided a scene change detection method in a scene change detection device to which video composed of audio signal and image signal is input, the scene change detection method including detecting silent state of the audio signal to generate silence detection time information, detecting brightness change or decreased level of brightness of the image in image signal to generate scene change time information indicating time detecting the brightness change or decreased level of brightness, generating scene change candidate time based on the silence detection time information and the scene change time information, and outputting scene change detection information when time difference between successive first scene change candidate time and second scene change candidate time is below detection maximum time.

According to the scene change detection device, the scene change candidate time detected based on the audio signal and the image signal is detected, and the scene change detection information is output based on the time difference between successive first scene change candidate time and second scene change candidate time and the detection maximum value. Therefore, it is possible to detect each section without having a plurality of settings even when the section of the time difference between successive first scene change candidate time and second scene change candidate time is indefinite.

According to the scene change detection device of the present invention, it is possible to detect the section that needs to be detected and having indefinite time with high accuracy.

### BRIEF DESCRIPTION OF THE DRAWINGS

The above and other objects, advantages and features of the present invention will be more apparent from the following description of certain preferred embodiments taken in conjunction with the accompanying drawings, in which:
Fig. 1 shows a block diagram of a coding device including a scene change detection device according to a first embodiment of the present invention;
Fig. 2 shows a flow chart of a detection process of a scene change candidate time in the scene change detection device according to the first embodiment of the present invention;
Fig. 3 shows a timing chart of the detection process of the scene change candidate time in the scene change detection device according to the first embodiment of the present invention;
Fig. 4 shows a flow chart of an output determination process in the scene change detection device according to the first embodiment of the present invention;
Fig. 5 schematically shows scene change detection information detected in the scene detection device according to the first embodiment of the present invention;
Fig. 6 schematically shows the scene change detection information detected in the scene detection device according to the first embodiment of the present invention;
Fig. 7 schematically shows the scene change detection information detected in the scene detection device according to the first embodiment of the present invention;
Fig. 8 schematically shows the scene change detection information detected in the scene detection device according to the first embodiment of the present invention; and
Fig. 9 shows a timing chart showing an example of preventing false detection due to shift between audio signal and image signal in the scene detection device according to the first embodiment of the present invention.

### DETAILED DESCRIPTION OF THE PREFERRED EMBODIMENTS

The invention will now be described herein with reference to illustrative embodiments. Those skilled in the art will recognize that many alternative embodiments can be accomplished using the teachings of the present invention and that the invention is not limited to the embodiments illustrated for explanatory purposes.

### First Embodiment

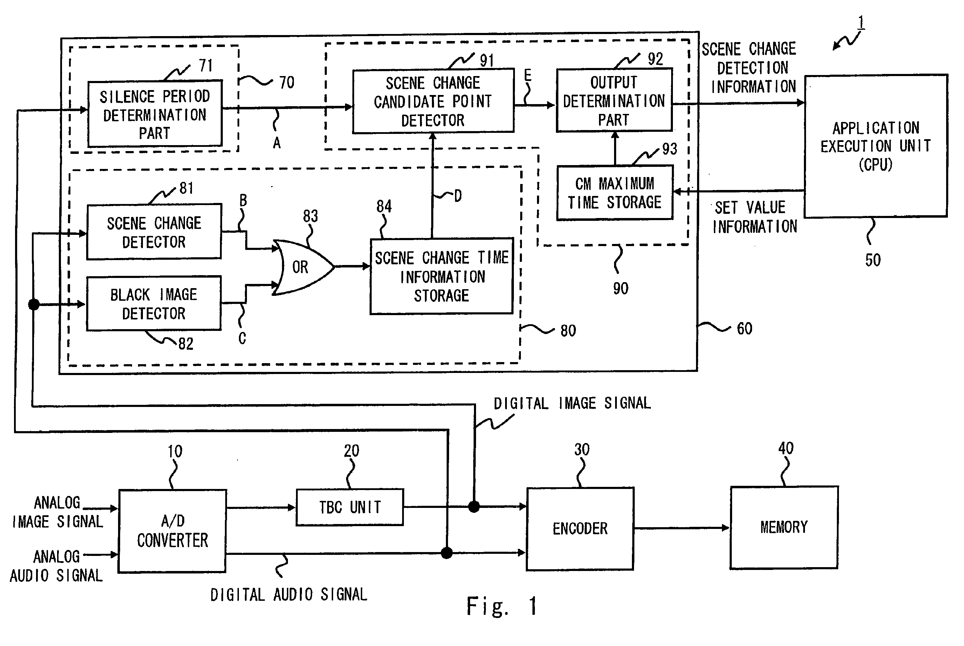

Hereinafter, the embodiment of the present invention will be described with reference to the drawings. Fig. 1 shows a block diagram of a coding device 1 according to the first embodiment of the present invention. As shown in Fig. 1, the coding device 1 includes an analog / digital converter (A/D converter) 10, a delay circuit (Time Base Corrector Unit: TBC unit) 20, an encoder 30, a storage device 40, an application execution unit (CPU) 50, and a scene change detection device 60.

The A/D converter 10 converts analog image signal and analog audio signal to digital image signal and digital audio signal and outputs the digital image signal and the digital audio signal. Note that the digital image signal and the digital audio signal are hereinafter simply called image signal and audio signal. The TBC unit 20 is one of delay circuits. For example, the TBC unit 20 adjusts delay amount of the image signal output from the A/D converter 10 to decrease time jitter of the image signal. The encoder 30 performs encoding of the image signal output from the TBC unit 20 and the audio signal output from the A/D converter 10 in accordance with a predetermined format (MPEG2 (Moving Picture Experts Group 2), for example). The memory 40 stores the data encoded by the encoder.

The application execution unit 50 executes application software such as recording software, for example. For example, central processing unit (CPU) or the like is used as the application execution unit 50. The application execution unit 50 receives scene change detection information from the scene change detection device 60 described below, generates information file having CM (Commercial Message) section described thereon, and stores the information file in the memory 40 with the recorded data.

The scene change detection device 60 outputs scene change detection information based on the image signal output from the TBC unit 20 and the audio signal output from the A/D converter 10. The scene change detection device 60 includes an audio information determination part 70, an image information determination part 80, and a segment determination part 90. The audio information determination part 70 analyzes the audio level of the audio signal to output silence detection time information. The audio information determination part 70 includes a silence period determination part 71. The time where the audio level of the audio signal becomes equal to or below the value of the predetermined silence determination level is set to start time. Then the silence period determination part 71 outputs end time of the silence determination period as silence detection time information A when the audio level does not exceed the threshold value during the predetermined silence determination period from the start time.

The image information determination part 80 detects brightness change or decreased level of brightness in the image signal output from the TBC unit 20 and stores the time detecting the brightness change or decreased level of brightness as scene change time information. The image information determination part 80 includes a scene change detector 81, a black image detector 82, an OR circuit 83, and a scene change time information storage 84.

When difference between the brightness level of the image signal of previous time and the brightness level of the image signal of current time is equal to or more than predetermined brightness change width threshold value, the scene change detector 81 determines that the scene change is occurred in the current time and outputs the current time as the scene change detection result B. When absolute value of the brightness level of the image signal of the current time is equal to or less than the predetermined brightness level threshold value, the black image detector 82 determines that the change to the black image is occurred in the current time and outputs the current time as the black image detection result C.

The OR circuit 83 outputs OR between the scene change detection result B and the black image detection result C as the scene change time. In other words, when the scene change detection result B and the black image detection result C indicate the same time, the OR circuit 83 outputs the time as the scene change time. On the other hand, when the scene change detection result B and the black image detection result C indicate the different time, the OR circuit 83 outputs each time as the scene change time. The scene change time information storage 84 stores the scene change time output from the OR circuit 83 as the scene change time information D.

The segment determination part 90 outputs the scene change detection information based on the silence detection time information A output from the audio information determination part 70 and the scene change time information D stored in the image information determination part 80. The segment determination part 90 includes a scene change candidate point detector 91, an output determination part 92, and a detection maximum value storage 93. The scene change candidate point detector 91 sets the predetermined period including the silence detection time information A as the silence period. When the scene change time extracted from the scene change time information D is included in the silence period, the scene change candidate point detector 91 outputs the scene change time as the scene change candidate time E. When a plurality of scene change time is included in the silence period, the scene change candidate point detector 91 outputs the earliest scene change time as the scene change candidate time E.

The output determination part 92 calculates a length of the detection section based on difference between successive first scene change candidate time and second scene change candidate time and compares the time of the length of the detection section with the detection maximum value stored in the detection maximum value storage 93 to output the scene change detection information. The determination process of the scene change detection information will be described later in detail. The detection maximum value storage 93 stores the detection maximum value. The detection maximum value may be sent from the application execution unit 50 or may be predetermined value. Further, the detection maximum value is defined as maximum time of one CM, for example. Hereinafter, the section shorter than the detection maximum value is called CM section and the longer section is called main part section.

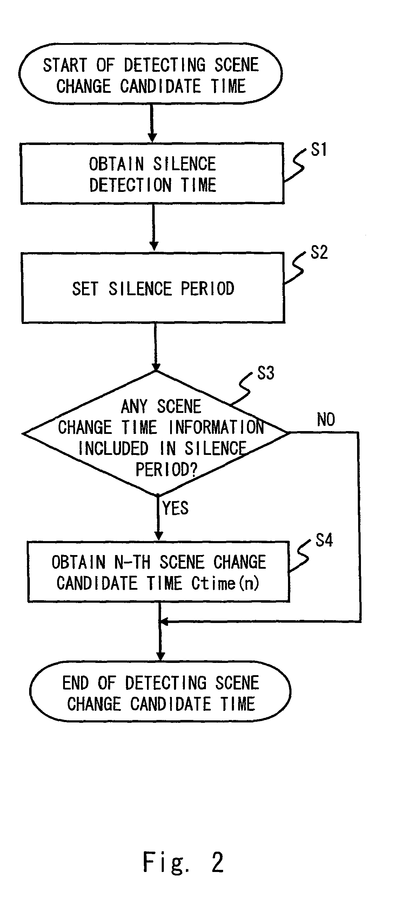

Now, a behavior of the scene change candidate point detector 91 will be described in detail. Fig. 2 shows a flow chart including the behavior of the scene change candidate point detector 91. In Fig. 2, the scene change candidate point detector 91 operates based on the behavior of the audio information determination part 70 and then the scene change candidate point detector 91 operates based on the behavior of the image information determination part 80.

According to the flow chart shown in Fig. 2, when the detection of the scene change candidate time is started, the audio level of the audio signal is analyzed in the audio information determination part 70 as a step S1 and the silence detection time information is output. Then the scene change candidate point detector 91 adds pre-detection period value before the time indicated by the silence detection time information and adds post-detection period value after this time. Then the scene change candidate point detector 91 sets the total value of the pre-detection period value and the post-detection period value as the silence detection period (step S2).

Then, in a step S3, it is determined whether there is a scene change time included in the silence period by referring to the scene change time information stored in the image information determination part 80. When there is no scene change time included in the silence period in the step S3, the scene change candidate time is not output. On the other hand, when there is a scene change time included in the silence period in the step S3, the information of the scene change time is output as the n-th scene change candidate time Ctime(n) (step S4).

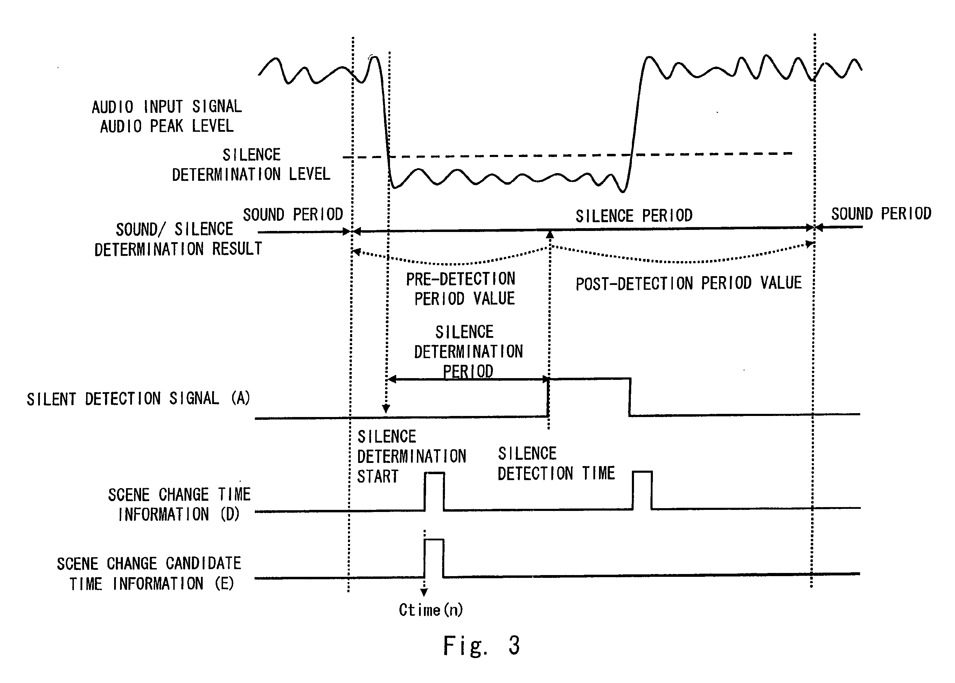

Now, a behavior of the scene change candidate point detector 91 will be described further in detail with reference to Fig. 3 showing a timing chart of the behavior thereof. First, when the audio level of the audio signal input to the audio information determination part 70 degrades and becomes below the silence determination level, the audio information determination part 70 sets the time as start time and starts silence determination. If the audio level does not exceed the silence determination level during the predetermined silence determination period from the silence determination start time, the audio information determination part 70 determines the time after the silence determination period as the silence detection time and outputs the time as the silence detection time information A.

Then the scene change candidate point detector 91 adds the pre-detection period value before the time indicated by the silence detection time information A as the predetermined period and post-detection period value after this time. Then the total value of the pre-detection period value and the post-detection period value is set as the silence detection period. Even when the audio level of the audio signal exceeds the silence determination level during the silence period, the silence detection period is uniquely set including its section. If there is a scene change time included in the silence period, the scene change candidate point detector 91 outputs the earliest scene change time as the scene change candidate time Ctime(n). Note that n indicates the number of the scene change candidate time that is detected.

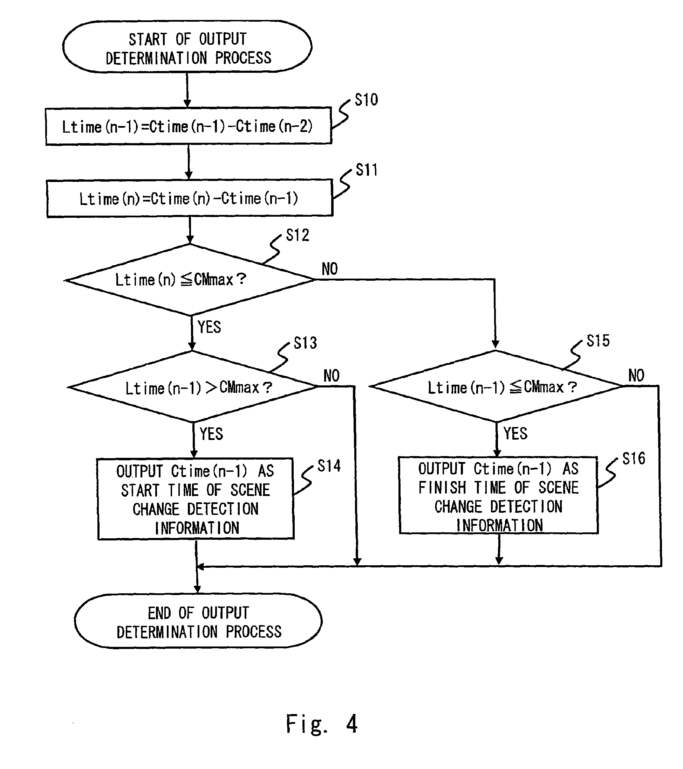

Now, a behavior of the output determination part 92 will be described in detail. Fig. 4 shows a flow chart showing a behavior of the output determination part 92. As shown in Fig. 4, the output determination part 92 first calculates a length of second detection section Ltime(n-1) from difference between scene change candidate time of two time before Ctime(n-2) and scene change candidate time of one time before Ctime(n-1) of the scene change candidate time (step S10). Then the output determination part 92 calculates a length of first detection section Ltime(n) from difference between scene change candidate time of one time before Ctime(n-1) and scene change candidate time of current time Ctime(n) of the scene change candidate time (step S11).

Then the length of the first detection section Ltime(n) and the value of the detection maximum value CMmax are compared with each other (step S12). If it is determined in step S12 that the length of the first detection section Ltime(n) is equal to or below the value of the detection maximum value CMmax, the length of the second detection section Ltime(n-1) and the detection maximum value CMmax are compared with each other (step S13). Then if the length of the second detection section Ltime(n-1) is above the detection maximum value CMmax in step S13, the scene change candidate time Ctime(n-1) is output as start time of the scene change detection information (step S14). If the length of the second detection section Ltime(n-1) is equal to or below the detection maximum value CMmax in step S13, the scene change detection information is not output and the process is completed.

On the other hand, if it is determined in step S12 that the length of the first detection section Ltime(n) is larger than the value of the detection maximum value CMmax, the length of the second detection section Ltime(n-1) and the detection maximum value CMmax are compared with each other (step S15). If the length of the second detection section Ltime(n-1) is equal to or below the detection maximum value CMmax in step S15, the scene change candidate time Ctime(n-1) is output as end time of the scene change detection information (step S16). If the length of the second detection section Ltime(n-1) is larger than the detection maximum value CMmax in step S15, the scene change detection information is not output and the process is completed.

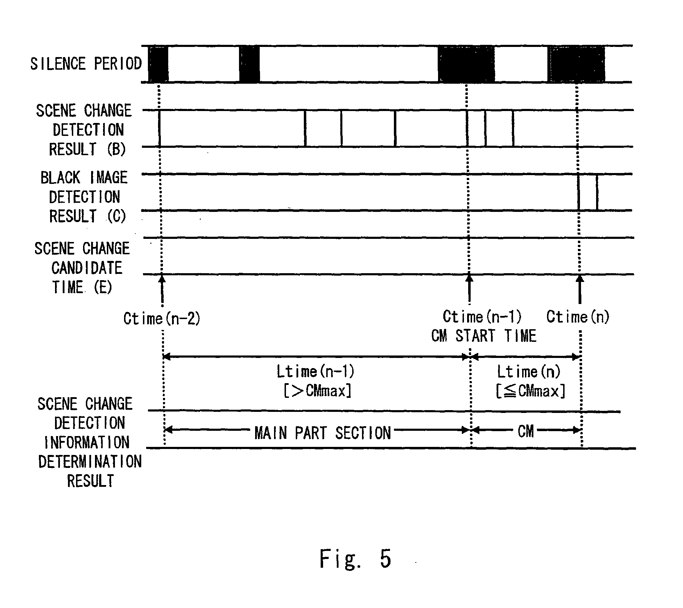

Figs. 5 to 8 schematically show the detected scene change detection information in the scene change detection device. Fig. 5 shows a case where the start time of the scene change detection information is output in step S14. In this case, the scene change candidate time E is detected based on the silence period, the scene change detection result B, and the black image detection result C. Then the length of the first detection section Ltime(n) calculated from the three scene change candidate time is equal to or below the detection maximum value CMmax and the length of the second detection section Ltime(n-1) is larger than the detection maximum value CMmax. Therefore, the scene change candidate time of one time before Ctime(n-1) is detected as start time of the scene change detection information (start time of the CM section, for example).

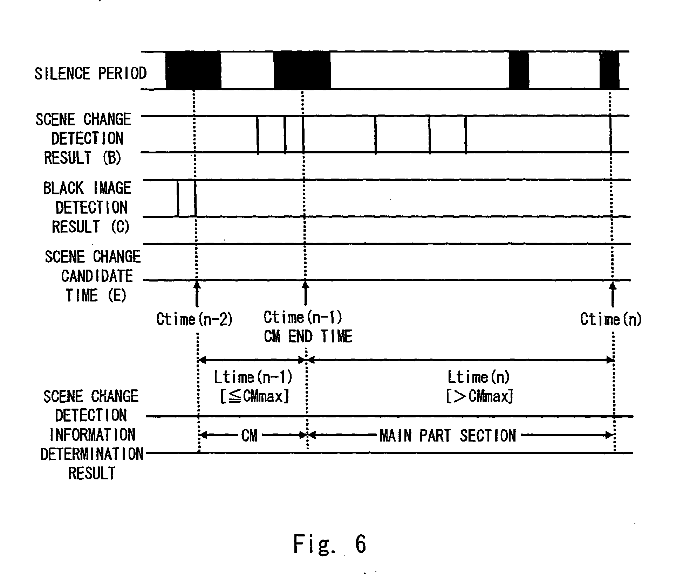

The example shown in Fig. 6 shows a case where end time of the scene change detection information is output in step S16. In this case, the scene change candidate time E is detected based on the silence period, the scene change detection result B, and the black image detection result C. Then the length of the first detection section Ltime(n) calculated from the three scene change candidate time is larger than the detection maximum value CMmax and the length of the second detection section Ltime(n-1) is equal to or below the detection maximum value CMmax. Therefore, the scene change candidate time of one time before Ctime(n-1) is detected as end time of the scene change detection information (end time of the CM section, for example).

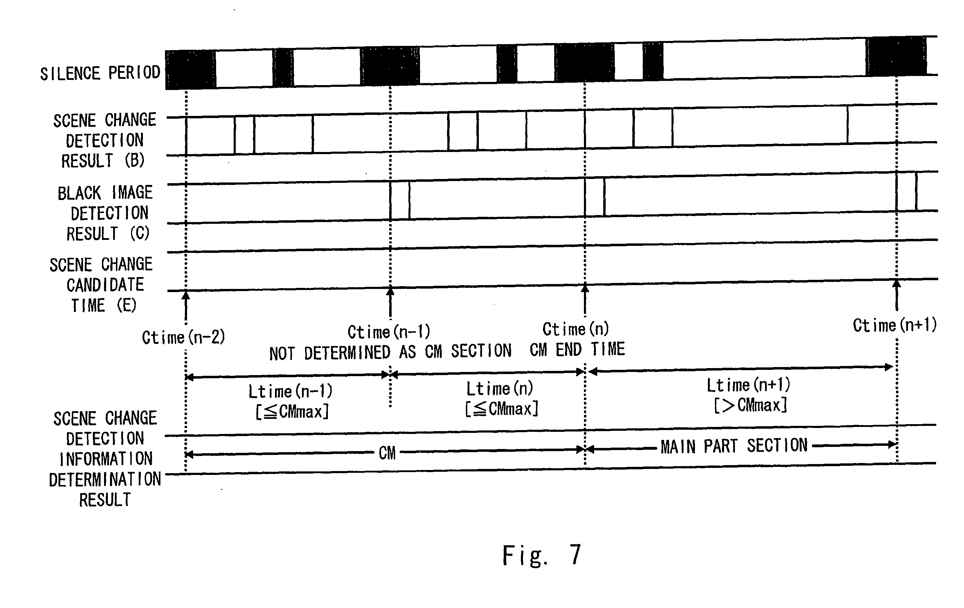

The example shown in Fig. 7 shows a case where it is determined in step S13 that the length of the second detection section is shorter than the detection maximum value. In such a case, the scene change candidate time E is detected based on the silence period, the scene change detection result B, and the black image detection result C. Then the length of the first detection section Ltime(n) calculated from the three scene change candidate time E is equal to or below the detection maximum value CMmax and the length of the second detection section Ltime(n-1) is equal to or below the detection maximum value CMmax. Therefore, the end time of the CM section is not detected for the scene change candidate time of one time before Ctime(n-1). Then the scene change candidate time of one time after Ctime(n+1) is detected. When the length of the third detection section calculated from the difference between the scene change candidate time Ctime(n+1) and the scene change candidate time Ctime(n) is larger than the detection maximum value CMmax, the scene change candidate time before the current time Ctime(n) is detected as end time of the scene change detection information (end time of the CM section, for example).

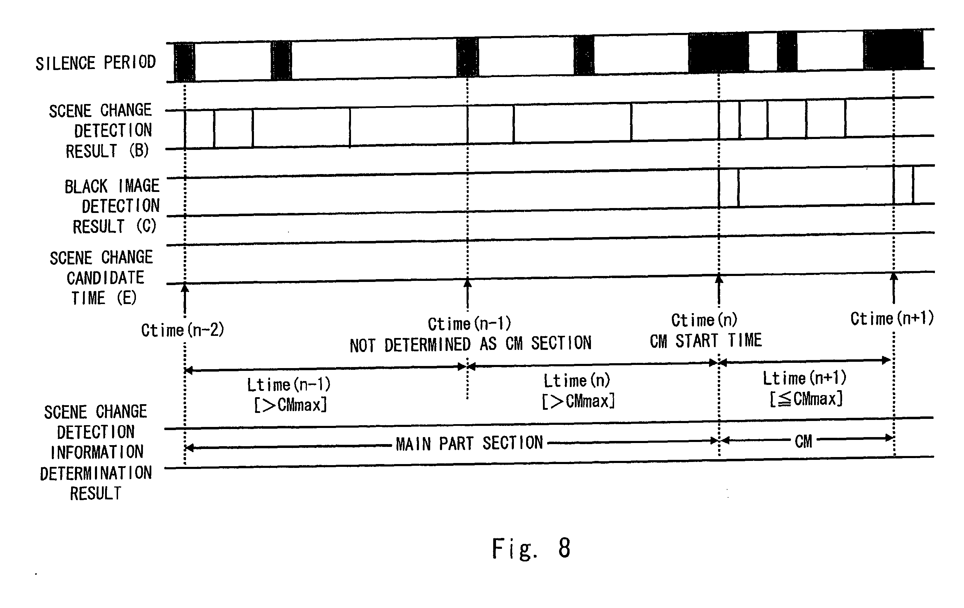

Fig. 8 shows an example where it is determined in step S15 that the length of the second detection section is larger than the detection maximum value CMmax. In this case, the scene change candidate time E is detected based on the silence period, the scene change detection result B, and the black image detection result C. Then the length of the first detection section Ltime(n) calculated from three scene change candidate time E is larger than the detection maximum value CMmax and the length of the second detection section Ltime(n-1) is larger than the detection maximum value CMmax. Therefore, the start time of the CM section is not detected for the scene change candidate time of one time before Ctime(n-1). Then the scene change candidate time of one time after Ctime(n+1) is detected. When the length of the third detection section calculated from difference between the scene change candidate time Ctime(n+1) and the scene change candidate time Ctime(n) is equal to or below the detection maximum value CMmax, the scene change candidate time before the current time Ctime(n) is detected as start time of the scene change detection information (start time of the CM section, for example).

As stated above, the scene change detection device 60 according to the present embodiment calculates the scene change candidate time based on the silence period of the audio signal and the change point of the image signal and calculates the length of the detection section from a plurality of scene change candidate time. The length of the detection section and the detection maximum value are compared with each other to prevent false detection of the section that is to be detected based on one set value even when the length of the detection section is indefinite. Therefore, the scene change detection device 60 according to the present embodiment can improve the detection accuracy of the section that is to be detected.

Further, the scene change detection device 60 according to the present embodiment compares each of the adjacent detection sections with the detection maximum value to determine the scene change candidate time that is to be detected based on the result, thereby improving detection accuracy compared with the case where the determination is made by only one detection section. For example, as shown in Fig. 8, it is possible not to detect the scene change candidate time Ctime(n-1) detected in the main part section. Further, by making determination using the plurality of detection sections, it is possible to determine a plurality of start time and end time of successive CM sections even when the CM sections are successive. For example, as shown in Fig. 7, when the plurality of CM sections are successive, start time of the earliest CM section and end time of the latest CM section of the successive CM sections are detected and the time between the successive CM sections may not be detected. By performing such a processing, the scene change detection device according to the present embodiment can decrease the number of scene change detection information that is to be detected.

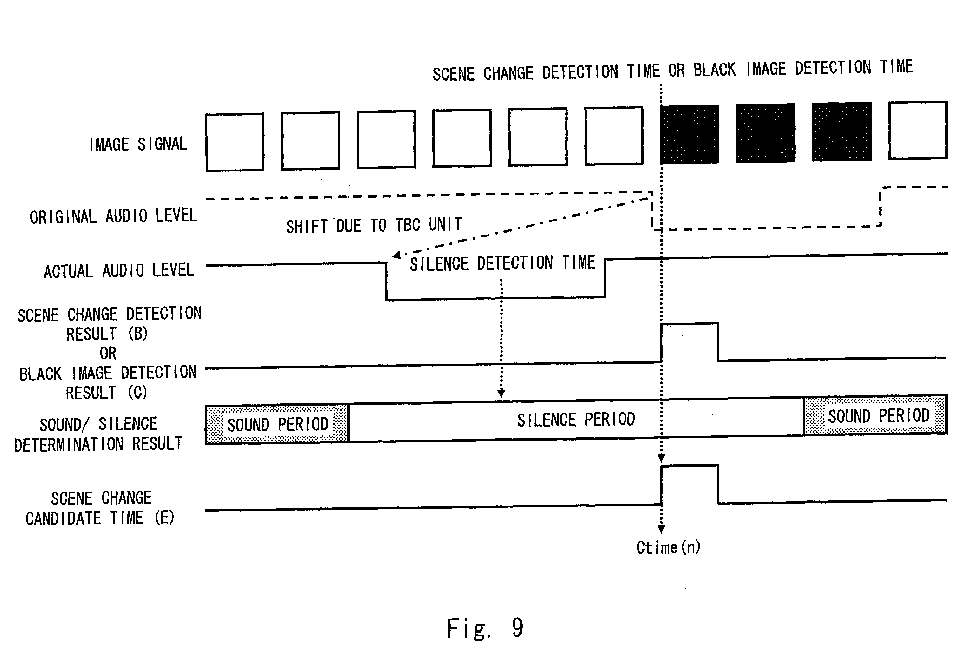

Further, the scene change detection device 60 according to the present embodiment can prevent false detection of the scene change candidate time by setting silence period having predetermined width with respect to the silence detection time determined by the audio information determination part 70 as silent. For example, since there is a delay caused by the TBC unit 20 in the coding device 1 shown in Fig. 1, shift is generated between the audio signal and the image signal as shown in Fig. 9. Normally, the audio level of the audio signal has to be degraded in synchronization with the black image of the image signal. However, in Fig. 9, shift is generated by the delay caused by the TBC unit 20 in the period where the audio level is degraded and the period where the black image is generated. Even in this case, the scene change detection device 60 according to the present embodiment sets the silence period having predetermined width with respect to the silence detection time, thereby greatly reducing this shift by the pre-detection set value and the post-detection set value, and correctly detecting the scene change candidate time.

It is apparent that the present invention is not limited to the above embodiments, but may be modified and changed without departing from the scope and spirit of the invention. For example, the detection maximum value is not limited to the maximum value of the CM section but can be any as long as the maximum value of the section that is to be detected is set.

## Claims

1. A scene change detection device comprising:
an audio information determination part detecting silent state of audio signal to output silence detection time information;
an image information determination part detecting brightness change or decreased level of brightness of an image in image signal to store scene change time information indicating time detecting the brightness change or decreased level of the brightness;
a scene change candidate point detector outputting scene change candidate time based on the silence detection time information and the scene change time information; and
an output determination part outputting scene change detection information based on time difference between successive first scene change candidate time and second scene change candidate time and a detection maximum value.

2. The scene change detection device according to claim 1, wherein the scene change candidate point detector sets predetermined period including the silence detection time information to silence period and outputs the scene change candidate time when the scene change time information is included in the silence detection period.

3. The scene change detection device according to claim 2, wherein the scene change candidate point detector outputs the scene change time information indicating earliest time as the scene change candidate time when a plurality of scene change time information are included in the silence period.

4. The scene change detection device according to claim 1, wherein the output determination part performs following steps of:
calculating a length of a first detection section based on time difference between current time of the scene change candidate time and time of one time before the current time of the scene change candidate time;
calculating a length of a second detection section based on time difference between time of one time before the current time of the scene change candidate time and time of two time before the current time of the scene change candidate time;
outputting the scene change candidate time of one time before as start time of the scene change detection information when the length of the first detection section is equal to or below the detection maximum value and the length of the second detection section is larger than the detection maximum value; and
outputting the scene change candidate time of one time before as end time of the scene change detection information when the length of the first detection section is below the detection maximum value and the length of the second detection section is below the detection maximum value.

5. The scene change detection device according to claim 1 further comprising a storage storing the detection maximum value.

6. The scene change detection device according to claim 1, wherein the image information determination part further comprises a scene change detector detecting brightness change of the image in the image signal, a black image detector detecting decreased level of brightness in the image signal, and an OR circuit implementing the logical OR operation between output of the scene change detector and output of the black image detector.

7. A coding device comprising:
a scene change detection device;
an analog/digital converter converting analog audio signal and analog image signal into digital audio signal and digital image signal;
a delay circuit delaying the digital image signal; and
a coding device including an encoder coding the digital image signal input through the delay circuit and the digital audio signal,
wherein the audio information determination part of the scene change detection device outputs the silence detection time information based on the digital audio signal, and the image information determination part of the scene change detection device outputs the scene change time information based on the digital image signal input to the encoder.

8. A scene change detection method in a scene change detection device to which video composed of audio signal and image signal is input, the scene change detection method comprising:
detecting silent state of the audio signal to generate silence detection time information;
detecting brightness change or decreased level of brightness of the image in image signal to generate scene change time information indicating time detecting the brightness change or decreased level of brightness;
generating scene change candidate time based on the silence detection time information and the scene change time information; and
outputting scene change detection information when time difference between successive first scene change candidate time and second scene change candidate time is below detection maximum time.
